# EUROPEAN PATENT APPLICATION

(11) **EP 3 834 676 A1**
(43) Date of publication of application: **16.06.2021**
(21) Application number: 19460068.0
(22) Date of filing: 13.12.2019
(51) Int. Cl.: A47J 27/21, A47J 36/36, A47J 33/00

(54) **PORTABLE WATER KETTLE WITH A HEATING CHANNEL IN THE INNER CHAMBER**

(71) Applicant: Sliwinski, Leslaw, 05-820 Piastów (PL)
(72) Inventor: Sliwinski, Leslaw, 05-820 Piastów (PL)

(57) **Abstract**

The subject of the utility model is a two-chamber container with a heating channel in the internal chamber, which is characterised in that it is made of a removable hearth 1 with fuel loading holes 2, two chambers: an internal chamber 3 and an external chamber 5 thermally separated from one another by means of thermal insulation seals 4 and air or vacuum insulation 6. Inside the internal chamber 5, there is a channel for circulation of exhaust gases 7, the outlet 10 of which passes through the upper part of the container, in which there is a pressure valve with a connection port 9 to which a coil 8 is connected, and a filling and emptying hole 12 closed with a filler plug 11. For transport, the hearth 1 is placed from above onto the container 13, and the coil 8 is folded into a transport position 14. In the vacuum flask function, the container is closed from below in place of the hearth 1 with a thermal insulation lid 15. A movable tripod 16 also acts as a handle for the hearth 1.

## Description

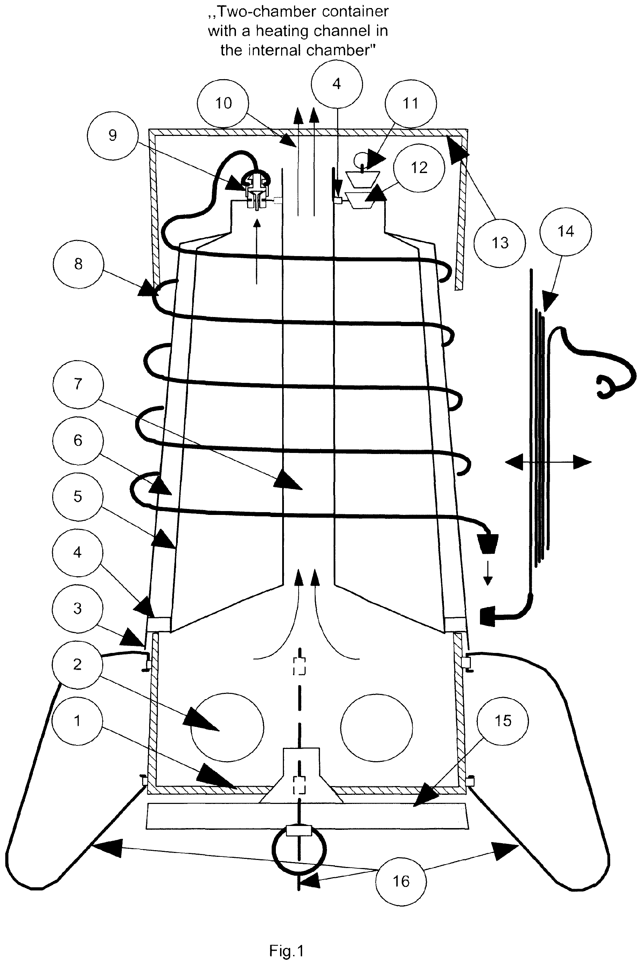

The subject of the utility model is a two-chamber container that has a heating channel in the internal chamber. Various types of dishes or containers for boiling and heating water are known: pots, pressure cookers, kettles. All these solutions are characterised by large heat losses, and thus by the need to provide a large amount of heat to achieve the intended goal, i.e. boiling or heating a given amount of water. In addition, they require a suitable workstand and weather conditions, and besides, they do not meet the requirements of fire safety in the forest (fireplace, open flame burners). The container having a cylindrical shape, according to the utility model, is characterised in that it is made of two thermally insulated chambers, wherein a heating channel is located in the internal chamber. The advantage of the two-chamber container with a heating channel in the internal chamber according to the utility model is that it allows heating or boiling of water with the smallest possible dimensions and the lowest possible energy supplied. This goal has been achieved by combining the advantages of a vacuum flask and a pressure cooker, i.e. insulation of the supplied flame energy from external conditions and minimisation of water evaporation into the atmosphere (closed vessel), and thus cooling of water during heating thereof, large heating surface (bottom surface of the internal chamber plus the surface of the heating channel) and meeting of fire safety conditions (hearth integrally connected to the container), the flame is not open and is insulated from the surroundings by the heating channel. As a result of using a pressure valve with a connection port in a closed container, seawater or biologically contaminated water can be distilled in order to obtain drinking water. Due to such a two-chamber and insulated construction, the temperature of the container has a temperature close to the ambient temperature, and hence it can be held with a bare hand without being exposed to burns. The subject of the utility model is shown in the drawing fig. 1 showing a main view of the two-chamber container with a heating channel in the internal chamber. Above the removable hearth 1 with holes 2 for supplying the combustible material, there is a container mad of an external chamber 3, a thermal insulation seal 4 and an internal chamber 5 between which there is thermal insulation in the form of vacuum or air 6. In the internal chamber 5, there is a channel for circulation of hot exhaust gases 7, an outlet 10 can be used to heat a dish with a meal. In the upper part of the internal chamber, there is a filling and emptying hole 12 with a plug 11 used to fill the chamber with water and to empty it. On the opposite side of the exhaust gas outlet channel, there is a pressure valve with a connection port 9 which opens when the vapour pressure in the internal chamber 5 increases, thanks to which the vapour escaping through the connection port flows through a coil 8 and undergoes condensation. The above coil 8 being folded in a transport position 14. The removable hearth 1 serves as an external cover 13 for the upper part of the container, protecting the pressure valve with the connection port 9, and the filling and emptying hole 12. By inserting a thermal insulation lid 15 into the lower part in place of the hearth, the container acts as a vacuum flask, maintaining the heat of the water just heated, during transport the plug 11 and the pressure valve 9 protecting water against spilling out. An important advantage of this two-chamber structure is the safety of use due to the fact that the external chamber 3 does not heat up from the flame (circulation of exhaust gases through the channel 7 in the internal chamber 5) or from the hot liquid in the internal chamber 5 thanks to the air or vacuum insulation 6 and to the thermal insulation seals 4 in the upper and lower, the plug 11 and the pressure valve 9 protecting it against spilling out. An important advantage of this two-chamber structure is the safety of use due to the fact that the external chamber 3 does not heat up from the flame (circulation of exhaust gases through the channel 7 in the internal chamber 5) or from the hot liquid in the internal chamber 5 thanks to the air or vacuum insulation 6 and to the thermal insulation seals 4 in the upper and lower part of the container. For a secure grip of the hearth 1 and a stable position when using the two-chamber container with a heating channel in the internal chamber, a movable tripod 16 with a handle function was used.

## Claims

1. A two-chamber container with a heating channel in the internal chamber of fig. 1, **characterised in that** it consists of an external, insulating chamber (3) and an internal, heating chamber (5) in which there is a channel for circulation of hot exhaust gases (7), and the external, insulating chamber (3) is insulated from the internal, heating chamber (5) by means of thermal insulation seals (4) and air or vacuum insulation (6).

2. The two-chamber container with a heating channel in the internal chamber according to claim 1, **characterised in that** it has in the upper part of the internal, heating chamber (5) a pressure valve with a connection port (9).

3. The two-chamber container with a heating channel in the internal chamber according to claim 1, **characterised in that** it has a hearth (1) also acting as a cover (13) for the upper part of the two-chamber container.

4. The two-chamber container with a heating channel in the internal chamber according to claim 1, **characterised in that** it has a foldable coil with a connection port (8).

5. The two-chamber container with a heating channel in the internal chamber according to claim 1, **characterised in that** it has a movable tripod 16 which also acts as a hearth handle.
